Europäisches Patentamt

European Patent Office

Office européen des brevets

Veröffentlichungsnummer: **0 286 795**
**A2**

# EUROPÄISCHE PATENTANMELDUNG

Anmeldenummer: **88101979.8**

Int. Cl.⁴: **H04M 19/02**

Anmeldetag: **11.02.88**

Priorität: **14.04.87 DE 3712573**

Veröffentlichungstag der Anmeldung:
**19.10.88 Patentblatt 88/42**

Benannte Vertragsstaaten:
**BE CH FR GB IT LI LU NL**

Anmelder: **TELENORMA Telefonbau und
Normalzeit GmbH
Mainzer Landstrasse 128-146
D-6000 Frankfurt am Main(DE)**

Erfinder: **Mitlehner, Gerhard
Frankfurter Strasse 66a
D-6070 Langen(DE)**

Schaltungsanordnung für die Rufstromanschaltung in Fernmelde-, insbesondere Fernsprechvermittlungsanlagen.

Die erfindungsgemäße Schaltungsanordnung sieht vor, daß die an jede Ader einer Anschlußleitung angeschlossene Induktivität aus je einer Drosselspule besteht, die jeweils eine Sekundärwickung aufweist. Diese Sekundärwicklungen sind jeweils mit zwei gegeneinander parallel geschalteten Dioden überbrückt. Das Übersetzungsverhältnis der Wicklungen auf den Drosselspulen ist so gewählt, daß der induzierte Anteil der Rufspannung ausreicht, um die Dioden in den Durchlaßbereich zu steuern. Diese Abwärtstransformation bewirkt außerdem, daß im Gesprächszustand durch die Sprechströme nur eine sehr geringe Spannung an den Sekundärwicklungen entsteht, die nicht ausreicht, die Dioden in den Durchlaßbereich zu bringen.

EP 0 286 795 A2

# Schaltungsanordnung für die Rufstromanschaltung in Fernmelde-, insbesondere Fernsprechvermittlungsanlagen

Die Erfindung betrifft eine Schaltungsanordnung für die Rufstromanschaltung in Fernmelde-, insbesondere Fernsprechvermittlungsanlagen nach dem Oberbegriff des Patentanspruchs 1.

Aus der DE-AS 22 30 040 ist eine Schaltungsanordnung zur Rufstromsteuerung in automatischen Fernsprechvermittlungsanlagen bekannt. Dabei wird der Rufstrom parallel an eine Teilnehmeranschlußleitung angeschaltet, wobei in diesen Stromkreis sich die zur Entkopplung der Sprechwege notwendigen Induktivitäten befinden. Über diese als Drosseln ausgeführten Induktivitäten fließt sowohl der Rufstrom als auch bei einer Teilnehmermeldung der Schleifengleichstrom. Es ist bekannt, daß auch bei der niedrigen Frequenz von ca. 50 Hertz des Rufstrom sich ein durch die Induktivitäten bewirkter erhöhter Widerstand im Rufstromkreis ergibt. Da bei einer parallelen Anschaltung des Rufstroms, wie sie bei den meisten elektronischen Vermittlungsanlagen vorgesehen ist, die Sprechadern zur Vermittlungsanlage hin nicht aufgetrennt sind, verzweigt sich außerdem noch der Rufstrom in einen Arteil, der zur Vermittlungsanlage hin fließt und den Teil des Rufstroms, der das Anruforgan in Teilnehmerendgerät zum Ansprechen bringen soll. Es ist deshalb von Nachteil, wenn durch die Induktivitäten sich bei der Rufstromaussendung ein erhöhter Vorwiderstand ergibt.

Die Aufgabe der Erfindung besteht darin, ein Schaltungsanordnung anzugeben, womit die Induktivität bei der Rufstromaussendung verringert wird, ohne daß dabei die Entkopplung der Sprechwege im Gesprächszustand ungünstig beeinflußt wird.

Diese Aufgabe wird durch eine Merkmalskombination gelöst, wie sie im Patentanspruch 1 angegeben ist.

Damit wird in vorteilhafter Weise erreicht, daß durch eine einfache Schaltmaßnahme die Effektivität des Rufstroms auf der Teilnehmeranschlußleitung gesteigert wird, wobei außerdem die Wirkung der Induktivität während des Gesprächszustands voll und ganz erhalten bleibt. Vorteilhafte Weiterbildungen der Erfindung ergeben sich aus den Unteransprüchen.

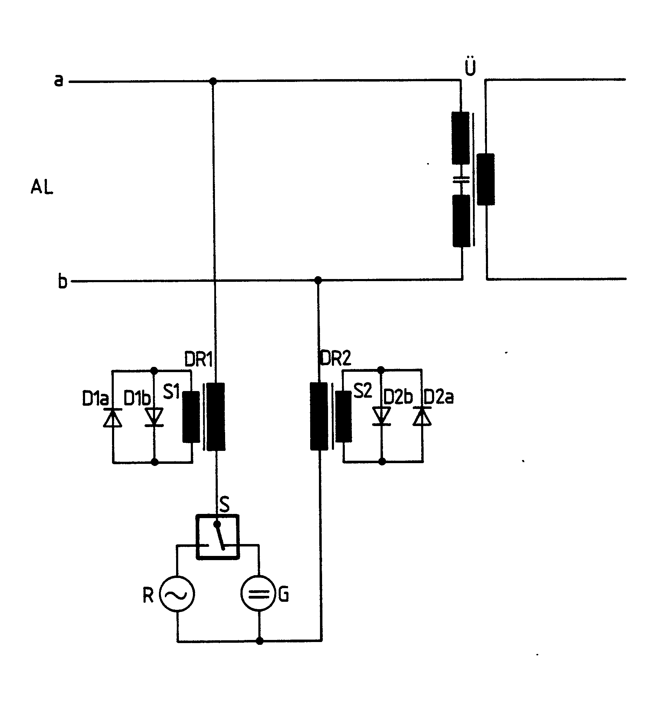

Ein Ausführungsbeispiel der Erfindung wird nachfolgend anhand von Zeichnungen näher erläutert. In der Zeichnung ist eine Anschlußleitung AL dargestellt die zur einem an die Fernsprechvermittlungsanlage angeschlossenen Endgerät führt. Diese Anschlußleitung AL ist anlagenseitig durch einen Übertrager Ü zu einem Koppelfeld hin abgeschlossen. Im Ruhezustand ist die Anschlußleitung AL mit ihren beiden Adern a und b über als Drosselspulen DR1 bzw. DR2 ausgeführte Induktivitäten mit einer Gleichspannungsquelle G verbunden. Wenn von einem Endgerät aus eine Belegung erfolgt, so fließt ein sogenannter Speisegleichstrom über die Induktivitäten, wodurch in nicht dargestellter Weise die Belegung erkannt werden kann und das Endgerät mit Strom versorgt wird. Eine Schalteinrichtung S, die zur Anschaltung des Rufstroms vorgesehen ist, befindet sich dabei in der dargestellten Ruhestellung.

Im Rufzustand, also dann, wenn ein Endgerät von der Vermittlungsanlage her aktiviert werden soll, wird die Schalteinrichtung S so gesteuert, daß eine Rufstromquelle R an mindestens eine A der a der Anschlußleitung AL angeschaltet wird. Dies geschieht in bekannter Weise in einem durch die Vermittlungsanlage festgelegten Rhythmus. Der Rufstrom fließt dabei über die Primärwicklungen der beiden als Drosseln DR1 und DR2 ausgeführten Induktivitäten über das Anruforgan des Endgeräts. Entsprechend dem Übersetzungsverhältnis der Wicklungen gelangt ein geringer Teil der an den Primärwicklungen der Drosseln DR1 und DR2 abfallenden Rufspannung auf die Sekundärwicklungen S1 bzw. S2. Das Übersetzungsverhältnis der Primärwicklungen zu den Sekundärwicklungen S1, S2 ist dabei so gewählt, daß die Größe der induzierten Spannung ausreicht, um die Dioden D1a, D1b bzw. D2a, D2b in den Durchlaßbereich zu steuern. Dabei wird durch die gegeneinander parallel geschalteten Dioden D1a, D1b bzw. D2a, D2b ein Kurzschluß auf den Sekundärwicklungen S1, S2 bewirkt. Dies hat zur Folge, daß die durch die Primärwicklungen verursuchte Induktivität im Rufstromkreis drastisch verringert wird. Die Effektivität des Rufstroms auf der Anschlußleitung und damit am Endgerät ist somit wesentlich erhöht.

Im Gesprächszustand und auch immer dann, wenn die Rufstromquelle R abgeschaltet ist, wirkt sich die durch das gewählte Übersetzungsverhältnis gegebene Abwärtstransformation so aus, daß auf der Anschlußleitung AL fließende Sprechströme nur eine so geringe Spannung an den Sekundärwicklungen S1 bzw. S2 entstehen lassen, daß die Dioden D1a, D1b, D2a, D2b gesperrt bleiben, weil ihre Durchlaßspannung nicht erreicht wird. Da somit die Sekundärwicklungen S1 bzw. S2 jeweils sehr hochohmig abgeschlossen sind, bleibt für den Gesprächszustand die Wirkung der Induktivität der Drosseln DR1, DR2 in voller Höhe erhalten. Damit ist die für einen Sprechweg geforderte Symmetrie- und Nebensprechdämpfung voll wirksam.

Wie im Patentanspruch 2 erwähnt, ist es auch möglich die Induktivität auf einen einzigen Eisenkern aufzubringen. In diesem Fall ist nur eine einzige Sekundärwicklung notwendig, und es werden zwei Dioden eingespart. Der Aufbau einer derartrigen Induktivität ist jedoch komplizierter, weil die Wicklungen symmetrisch aufgebracht werden müssen und weil ein größerer Kern gewählt werden muß. Dadurch geht ein Teil der Ersparnisse wieder verloren und es hängt vom Anwendungsfall ab, welche Bauform für die Induktivität am günstigsten ist.

Anstelle von Dioden D1a, D1b, D2a, D2b lassen sich auch aktive elektronische oder mechanische Schaltmittel anwenden, die zusammen mit der Schalteinrichtung S angesteuert werden. Dabei lassen sich die gleichen bereits geschilderten Effekte erzielen.

## Ansprüche

1. Schaltungsanordnung für die Rufstromanschaltung in Fernmelde-, insbesondere Fernsprechvermittlungsanlagen, wobei die Rufstromquelle parallel, symmetrisch über die Entkopplung der Sprechwege bewirkende Induktivitäten an eine Anschlußleitung angeschaltet wird, um Rufstrom zu einem Endgerät auszusenden,
dadurch gekennzeichnet,
daß die an jede Ader (a/b) der Anschlußleitung (AL) angeschlossene Induktivität aus je einer Drosselspule (DR1,DR2) besteht, die jeweils eine Sekundärwicklung (S1,S2) aufweist, welche jeweils direkt mit zwei gegeneinander parallel geschalteten Dioden (D1a,D1b bzw. D2a,D2b) überbrückt ist, und daß das Übersetzungsverhältnis der Wicklungen auf den Drosselspulen (DR1,DR2) so gewählt ist, daß bei der Rufstromanschaltung zur Verringerung der Induktivität ein geringer Teil der Rufspannung die Dioden (D1a,D1b,D2a,D2b) in den Durchlaßbereich steuert, und daß die Dioden (D1a,D1b,D2a,D2b) bei der transformatorischen Übertragung von Sprechspannungen zur Erhaltung der Induktivität gesperrt bleiben.

2. Schaltungsanordnung nach Anspruch 1,
dadurch gekennzeichnet,
daß die beiden Drosselspulen (DR1,DR2) auf einen einzigen Kern gewickelt sind, und daß nur eine mit Dioden (z.B. D1a,D1b) beschaltete Sekundärwicklung (z.B. S1) vorhanden ist.

3. Schaltungsanordnung nach Anspruch 1,
dadurch gekennzeichnet,
daß anstelle der Dioden (D1a,D1b,D2a,D2b) Schaltmittel vorgesehen sind, die bei der Rufstromaussendung aktiviert werden und die Sekundärwicklungen (S1,S2) kurzschließen.